# FASCICULE DE BREVET EUROPEEN

(11) **EP 2 098 728 B1**
(45) Date de publication et mention de la délivrance du brevet: **11.02.2015**
(21) Numéro de dépôt: 09290151.1
(22) Date de dépôt: 03.03.2009
(51) Int. Cl.: F04B 35/04, F04B 39/14, B60G 17/052

(54) **Compresseur à piston**
Kolbenverdichter
Piston compressor

(30) Priorité: 04.03.2008 FR 0801177
(43) Date de publication de la demande: 09.09.2009
(73) Titulaire: WABCO France, 77410 Claye Souilly (FR)
(72) Inventeur: Jolibert, Christophe, 77600 Chanteloup en Brie (FR)
(74) Mandataire: Hirsch & Associés

(56) Documents cités:
- GB-A- 2 032 004
- US-A- 5 711 150

## Description

La présente invention concerne un compresseur à piston notamment du type mis en oeuvre dans les dispositifs de suspension pneumatique de véhicule léger. Ces dispositifs de suspension pneumatique équipent notamment des véhicules particuliers par exemple de type berlines ou véhicules tout terrain.

Il est connu de FR-A-2 752 269 et FR-A-2 752 310, un compresseur à piston comprenant un cylindre dans lequel se déplace alternativement un piston relié mécaniquement à une bielle dont la tête est entraînée en rotation par un maneton d'un vilebrequin.

Selon ces documents, le cylindre est formé dans un carter cylindre, ce dernier étant réalisé par moulage d'un alliage d'aluminium. Le cylindre comporte une ouverture latérale fermée par un flasque support de palier pour l'arbre de sortie d'un moteur électrique, l'arbre de sortie du moteur électrique faisant saillie dans le cylindre pour pouvoir entraîner en rotation le vilebrequin.

Dans ces deux documents, les porte-balai (également appelés porte-charbon) du moteur électrique sont montés sur un flasque en plastique interposé entre le flasque support de palier et le carter moteur, ce dernier étant réalisé sous une forme sensiblement cylindrique et présentant une ouverture en vis-à-vis de l'ouverture latérale du carter cylindre.

Or, la mise en place du flasque qui supporte les porte-balai est malaisée dans ces compresseurs. De ce fait, le montage des compresseurs peut manquer de précision et les porte-balai peuvent être mal positionnés. Ce mauvais positionnement des porte-balai peut se traduire par un fonctionnement défectueux du compresseur.

Par ailleurs, le positionnement malaisé du flasque qui supporte les porte-balais rend difficile, dans ces compresseurs connus, l'obtention d'une bonne répétabilité du montage des porte-balai, c'est-à-dire un positionnement sensiblement identique des porte-balai d'un compresseur à l'autre. Ainsi, il est difficile d'assurer une homogénéité de performance (notamment de durabilité) de ces compresseurs connus.

Par ailleurs, selon les deux documents FR-A-2 752 269 et FR-A-2 752 310, une cavité latérale est également formée dans le carter cylindre, du côté opposé, par rapport au cylindre, à l'ouverture latérale par laquelle l'arbre de sortie du moteur fait saillie dans le cylindre. Une cartouche dessiccative (ou séchante) est montée à l'intérieur de cette cavité latérale, qui s'étend sensiblement parallèlement à l'axe de la bielle en position de point mort haut du piston. Pour assurer le montage de cette cartouche dessiccative, cette dernière est fixée sur un corps de support qui ferme la cavité latérale. Cette cartouche dessiccative permet d'assécher l'air qui provient de l'atmosphère et qui est donc chargé d'humidité. Cet air doit être asséché car l'humidité qu'il contient peut s'avérer nuisible au bon fonctionnement du dispositif relié au compresseur. Cela est notamment le cas des dispositifs connus de suspensions pneumatiques.

Cependant, le montage de la cartouche dessiccative dans les compresseurs selon FR-A-2 752 269 et FR-A-2 752 310 présente certains inconvénients. En effet, ce montage nécessite la réalisation, par moulage d'aluminium, d'une pièce formant le carter cylindre et le logement dans lequel est logée la cartouche dessiccative. Cependant le procédé de fabrication des compresseurs selon les documents cités apparaît complexe et, par conséquent, coûteux. En particulier, ce procédé de fabrication comprend une étape conséquente et délicate d'usinage de la pièce formant le carter cylindre.

De plus, ce montage de la cartouche dessiccative logée dans un logement est relativement volumineux. Or, les compresseurs tels que décrits et qui sont notamment destinés à être mis en oeuvre dans des véhicules automobiles, sont implantés dans des espaces confinés et restreints.

Il est également connu de monter la cartouche dessiccative dans un carter de cartouche dessiccative, distinct du carter cylindre, et de fixer ce carter de cartouche dessiccative sur le carter cylindre. Cependant, ce montage est également volumineux.

Enfin, US-A-5 711 150 décrit un système de commande de la hauteur d'un véhicule pour la commande de la suspension d'un véhicule. Ce système de commande comprend un compresseur, pour la production d'air comprimé, muni d'un moteur électrique entrainant un piston à l'intérieur d'un carter. Le moteur comporte des porte-balai fixés au carter.

Le but de la présente invention est de fournir un compresseur à piston palliant au moins partiellement les inconvénients précités.

L'invention vise notamment à fournir un compresseur à piston dont la fabrication est plus aisée et dont le coût de fabrication est réduit par rapport aux compresseurs à piston connus.

A cette fin, la présente invention propose un compresseur à piston comprenant :
un piston adapté à être entraîné en translation alternative par la rotation d'un vilebrequin ménagé dans un carter vilebrequin ; et un moteur électrique dont l'arbre de sortie est adapté à entraîner en rotation le vilebrequin, le moteur électrique comprenant des porte-balai qui sont fixés sur le carter vilebrequin, le carter vilebrequin est réalisé par surmoulage sur les porte-balai pour que les porte-balai soient fixés sur le carter vilebrequin.

Suivant des modes de réalisation préférés, l'invention comprend encore une ou plusieurs des caractéristiques suivantes :
- le carter vilebrequin est en matériau polymère chargé de fibres de verre ;
- les porte-balai sont en laiton ;
- le carter vilebrequin comporte un logement recevant un palier supportant en rotation l'arbre de sortie du moteur électrique ;
- le logement est ouvert sur l'intérieur du carter vilebrequin pour permettre le montage du palier depuis l'intérieur du carter vilebrequin ;
- le moteur comprend des balais, les balais étant fixés à une partie des porte-balai située à l'extérieur du carter vilebrequin ;
- le compresseur comprend en outre un dispositif dessiccateur ;
- le dispositif dessiccateur comporte une cavité contenant un matériau dessiccateur ;
- la cavité a la forme d'une portion d'anneau, l'axe de la cavité s'étendant parallèlement à l'axe de rotation de l'arbre de sortie du moteur;
- le dispositif dessiccateur comporte un corps, fixé au carter vilebrequin, dans lequel est formée la cavité contenant le matériau dessiccateur ;
- la cavité est fermée au moyen d'une plaque fixée au carter vilebrequin;
- le compresseur comporte une chambre de compression ménagée dans une pièce formant cylindre et culasse ;
- la culasse présente des ailettes de refroidissement;
- la pièce formant cylindre et culasse est réalisée en alliage d'aluminium ;
- le piston est rigidement solidaire d'une bielle, la bielle étant montée à rotation sur un maneton d'un vilebrequin et dans lequel l'admission d'air dans la chambre de compression est commandée par la géométrie de l'ensemble piston-bielle-vilebrequin.

L'invention propose encore un dispositif de suspension pneumatique, comprenant : au moins un coussin ; un compresseur à piston selon l'invention, le coussin étant en communication de fluide, au travers d'au moins une électrovalve, avec le compresseur ; et une unité électronique de pilotage adaptée à commander ladite électrovalve.

D'autres caractéristiques et avantages de l'invention apparaîtront à la lecture de la description qui suit d'un mode de réalisation préféré de l'invention, donnée à titre d'exemple et en référence au dessin annexé, dans lequel :
la figure 1 représente une vue en coupe longitudinale d'un compresseur selon l'invention ;
la figure 2 représente en perspective le carter vilebrequin du compresseur de la figure 1 ; et
la figure 3 représente une vue éclatée du dispositif dessiccateur du compresseur de la figure 1.

Selon l'invention, les porte-balai du moteur électrique qui entraîne le piston du compresseur, sont fixés sur le carter vilebrequin du compresseur. Or, le carter vilebrequin est une pièce de structure qui est fabriquée pour résister aux contraintes thermiques et mécaniques auxquelles elle est soumise. Ainsi, la fixation des porte-balai sur le carter vilebrequin permet d'assurer dans le temps, le positionnement des porte-balai (et donc des balais) par rapport au collecteur fixé sur l'arbre de sortie du moteur. En outre, la fixation de ces porte-balai peut intervenir avant la mise en place du moteur. La fixation des porte-balai sur le carter vilebrequin est donc plus aisée que le montage du flasque de l'état de la technique. Par ailleurs, le nombre de pièces du compresseur est réduit et la fabrication du compresseur comprend moins d'étapes de montage.

Selon l'invention, le carter vilebrequin est surmoulé sur les porte-balai. Le procédé de fabrication du carter vilebrequin par surmoulage sur les porte-balai présente également un gain de temps par rapport aux solutions connues.

Selon une solution préférée, le compresseur à piston comprend en outre un dispositif dessicateur, qui est réalisé sous la forme d'un corps à l'intérieur duquel est formée une cavité, de préférence en forme de portion d'anneau, contenant un matériau dessiccateur. Cette forme de réalisation permet un gain de place par rapport aux dispositifs de l'état de la technique. Cela est particulièrement vrai en comparaison des dispositifs connus comprenant une cartouche montée parallèlement à l'axe de rotation de l'arbre moteur. Cela est cependant également vrai lorsque l'axe de la cartouche est perpendiculaire à l'axe de l'arbre de sortie du moteur. En outre, il est connu, dans ce dernier cas, de soutenir la cartouche au moyen d'une pièce de support qui ferme le carter cylindre. Avec le dispositif selon l'invention, cette pièce de support n'est plus nécessaire car le corps est fixé directement sur le carter vilebrequin du compresseur.

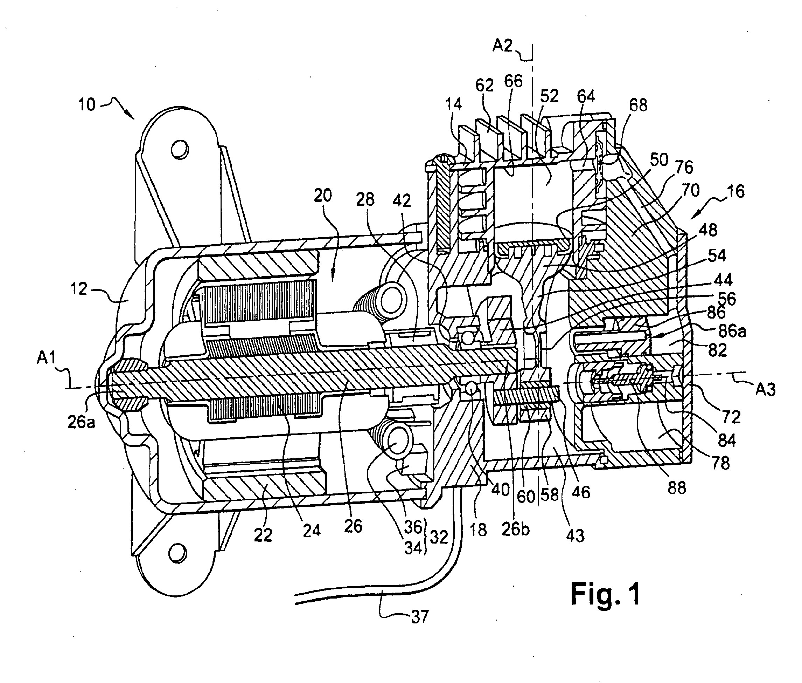

Tel que représenté sur la figure 1, le compresseur à piston 10 selon l'invention comporte un carter moteur 12, une pièce 14 formant à la fois un cylindre et une culasse (ci-après « culasse 14 ») et un dispositif dessiccateur 16, tous trois fixés sur un carter vilebrequin 18.

Un moteur électrique est agencé à l'intérieur du carter moteur 12. Il est remarquable que ce carter moteur présente une ouverture latérale. En effet, afin de réduire le porte à faux de l'arbre moteur, certains éléments constitutifs du moteur sont fixés non pas à l'intérieur du carter moteur 12, mais sur le carter vilebrequin 18.

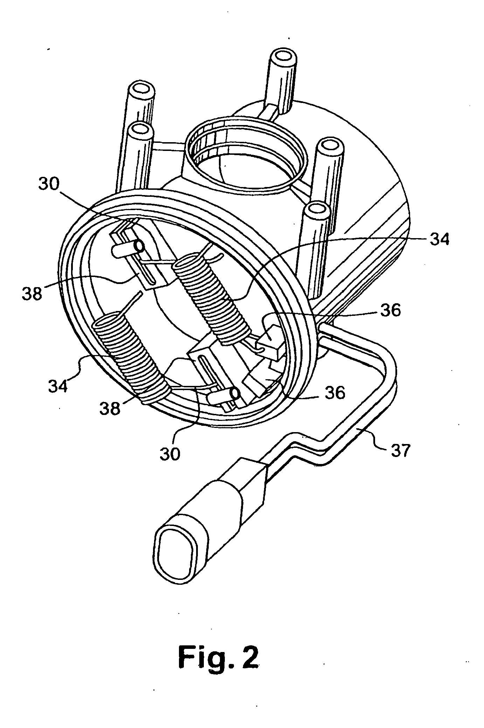

Ainsi, le moteur électrique 20 comprend, à l'intérieur du carter moteur 12, un stator 22 et un rotor 24 coaxiaux, le rotor 24 étant monté radialement à l'intérieur du stator 22. Le rotor 24 est solidaire en rotation d'un arbre de sortie 26 du moteur 20 de sorte que le rotor 24 entraîne en rotation l'arbre de sortie 26. Un collecteur 28 est monté sur l'arbre de sortie 26 du moteur 20, solidaire en rotation de cet arbre de sortie. Le collecteur 28 est apte à coopérer avec deux balais 30 (ou charbons), représentés sur la figure 2.

Le moteur 20 comprend eu outre, fixé sur le carter vilebrequin 18, un agencement 32 de deux bobines 34 et deux capacités 36 destiné à filtrer les éventuels champs électromagnétiques parasites susceptibles de perturber les champs magnétiques environnants. Notamment, quand le compresseur est monté dans un véhicule automobile, ces champs magnétiques seraient susceptibles de nuire au bon fonctionnement des circuits et unités électroniques du véhicule.

Le moteur électrique est alimenté en courant au moyen de câbles électriques 37.

Tel que cela est représenté à la figure 2, les balais 30 du moteur électrique 20 sont montés sur des porte-balai 38. De manière remarquable, les porte-balai 38 sont fixés sur le carter vilebrequin 18 et non, comme cela est connu, sur un flasque interposé entre le carter moteur et le carter formant le cylindre. Cette disposition permet un montage plus aisé et plus rapide des porte-balai 38. En outre, le carter vilebrequin est réalisé dans un matériau qui lui permet de résister aux contraintes thermiques auxquelles il est soumis. Ainsi, le positionnement des porte-balai 38 est assuré dans le temps.

Plus précisément, tels que représentés sur la figure 2, le carter vilebrequin 18 est réalisé par surmoulage sur les porte-balai 38 de manière que les porte-balai 38 sont fixés sur le carter vilebrequin. Ce procédé de réalisation de l'ensemble carter vilebrequin et porte-balai est précis et rapide par rapport à la solution connue de fixation des porte-balai sur un flasque et de mise en place ultérieure du flasque, interposé entre le carter moteur et le carter formant cylindre.

De préférence, les porte-balai sont réalisés en laiton, matériau conducteur peu coûteux et facile à surmouler.

Le surmoulage du carter vilebrequin 18 sur les porte-balai 38 est réalisé de manière que les porte-balai 38 soient fixés sur le carter vilebrequin 18. Une solution pour ce faire consiste à surmouler le carter vilebrequin 18 de manière que celui-ci emprisonne les porte-balais 38 dans une de ses parois, de manière que les porte-balai soient fixes par rapport à cette paroi du carter vilebrequin. Pour ce faire, le carter vilebrequin peut par exemple être surmoulé autour des porte-balai tout en laissant la face utile des porte-balai faire saillie, les porte-balai présentant en outre une entaille destinée à être sensiblement parallèle à la paroi du carter vilebrequin et qui est remplie de matière durant l'étape de surmoulage du carter vilebrequin.

Bien entendu, d'autres solutions existent pour réaliser le surmoulage du carter vilebrequin sur les porte-balai pour que les porte-balai soient fixés sur ce carter vilebrequin. Ces solutions varient notamment en fonction des formes du carter de vilebrequin, des porte-balai, des balais et du collecteur.

Selon une autre variante, on peut également envisager que le carter vilebrequin comporte des logements adaptés à recevoir les porte-balai, ces logements étant formés durant le moulage du carter vilebrequin. Selon cette variante de réalisation, les porte-balai sont fixés sur le carter vilebrequin après le moulage de celui-ci.

En l'espèce, les balais 30 sont fixés à une partie des porte-balai 38 qui est située à l'extérieur du carter vilebrequin 18.

Par ailleurs, l'arbre de sortie 26 du moteur 20 est guidé au niveau de sa première extrémité 26a distante du carter vilebrequin 18 ainsi qu'à proximité de sa seconde extrémité 20b opposée à la première extrémité 20a. Un positionnement précis de l'axe de rotation de l'arbre de sortie du moteur est ainsi assuré.

En l'espèce, l'arbre de sortie 26 du moteur 20 est monté, à proximité de sa seconde extrémité 20b, dans un palier à roulement à billes 40. Ce palier à roulement à billes 40 est fixé à l'intérieur d'un logement 42 de forme complémentaire. Le logement 42 est ménagé dans la paroi du carter vilebrequin 18, de préférence, dans la paroi du carter vilebrequin, du côté opposé au moteur 20.

Ainsi, ce montage présente l'avantage, par rapport aux solutions de l'art antérieur, de ne pas nécessiter une pièce supplémentaire (le flasque support de palier). De plus, le positionnement du flasque des solutions antérieures est délicat et peut manquer de précision. Or, la position du flasque influence la position de l'arbre de sortie et donc le mouvement du piston du moteur.

Au contraire, dans le cas du compresseur 10, le montage est réalisé directement dans le carter vilebrequin 18. Cette solution est donc à la fois plus rapide et plus précise puisque le logement est réalisé durant le moulage du carter vilebrequin. De plus, cette réalisation du logement présente une compacité accrue par rapport aux solutions connues de l'art antérieur dans lesquelles un flasque est interposée entre le carter cylindre et le carter moteur.

L'arbre de sortie 26 du moteur 20 est agencé de telle sorte que l'extrémité 20b de l'arbre de sortie 26 fait saillie à l'intérieur du carter vilebrequin 18, dans une chambre de vilebrequin 43. Cette chambre de vilebrequin 43 est en communication de fluide avec l'extérieur au travers d'un conduit d'admission (non représenté) à l'intérieur duquel est monté un filtre notamment pour empêcher les saletés et poussières de pénétrer à l'intérieur de la chambre de vilebrequin 43.

Un vilebrequin 44 est monté solidaire en rotation à l'extrémité 20b de l'arbre de sortie 26 du moteur 20 qui fait saillie à l'intérieur du carter vilebrequin 18, dans le chambre de vilebrequin 43. Le vilebrequin 44 présente un maneton 46 désaxé par rapport à l'axe A1 de l'arbre de sortie 26 du moteur 20.

Le maneton 46 entraîne ainsi en translation alternative dans les deux sens un piston 48, dans une direction sensiblement perpendiculaire à l'axe de l'arbre de sortie 26 du moteur 20. Un joint à lèvre 50 est monté sur la tête du piston 48, le piston 48 délimitant avec ce joint à lèvre 50 une chambre de compression 52, de préférence sensiblement cylindrique, à l'intérieur la culasse 40.

Plus précisément, une bielle-piston 54, formée d'une bielle 56 monobloc avec le piston 48 proprement dit, présente une tête de bielle 58 qui est montée à rotation sur le maneton 46, par l'intermédiaire d'un roulement à billes 60.

Cependant, selon une variante non représentée, la bielle et le piston 48 ne sont pas monoblocs mais restent cependant rigidement solidaire l'un de l'autre.

Tel que représenté, le compresseur 10 est dépourvu de valve d'admission d'air dans la chambre de compression.

En effet, avec le compresseur représenté, l'admission dans la chambre de compression d'air à comprimer est commandée par la géométrie de l'ensemble bielle-piston-maneton de vilebrequin.

Pour ce faire, l'axe A1 de l'arbre de sortie 26 du moteur 20, autour duquel tourne le maneton de vilebrequin 46, est décalé par rapport à l'axe A2 de la chambre de compression 52 dans le plan perpendiculaire à l'axe de rotation du maneton 46, d'une distance d. Cette distance d peut, par exemple, être une fraction de la course du piston 48. Le sens du décalage est choisi de manière à obtenir, pour le sens de rotation du vilebrequin 44, une forte inclinaison de la bielle 56 et du piston 48 par rapport à l'axe de la chambre de compression 52 pendant la course d'admission (ou d'aspiration), et une faible inclinaison pendant la course de travail ou de compression.

De préférence, le carter vilebrequin est réalisé dans un matériau isolant électrique. En effet, la réalisation du carter vilebrequin dans un matériau isolant électrique permet d'éviter les problèmes d'isolation électrique des porte-balai vis-à-vis du carter vilebrequin 18.

De préférence encore, le carter vilebrequin 18 dans lequel sont montés le vilebrequin, la bielle et le piston, est en matière polymère haute qualité, par exemple en polymère - notamment en polyamide - chargé de fibres de verre. Le carter vilebrequin 18 est par exemple en PA6T/6I chargé à 50% de fibres de verre.

En effet, ce type de matériau permet de former par moulage un carter vilebrequin de bonne qualité, c'est-à-dire adapté à résister aux contraintes thermiques et mécaniques qu'il est amené à subir en utilisation. De plus, la réalisation du carter vilebrequin par moulage d'un tel matériau polymère permet de se dispenser de l'étape d'usinage qu'implique l'utilisation d'un matériau métallique et notamment d'un alliage d'aluminium. La réalisation du carter vilebrequin par moulage de matériau polymère permet ainsi un gain de temps de fabrication (l'étape d'usinage étant supprimée ou du moins simplifiée) et donc un gain de coût de fabrication.De plus, le moulage de l'aluminium est réalisé à une température d'environ 650°C tandis que les matériaux polymères mis en oeuvre peuvent être moulés à une température d'environ 100°C. Ainsi, le moulage du carter vilebrequin en matériau polymère fatigue moins le moule que le moulage en alliage d'aluminium. Ainsi, un moule peut être utilisé plus longtemps quand le carter vilebrequin est réalisé en matériau polymère que lorsqu'il est réalisé en alliage d'aluminium.

Même quand le carter vilebrequin 18 est réalisé en matériau polymère chargé de fibres de verre, la culasse 14 est de préférence réalisée en aluminium ou dans un alliage d'aluminium pour permettre d'une part une bonne résistance aux contraintes mécaniques et thermiques tout en conservant un poids limité et, d'autre part, pour permettre une bonne évacuation de la chaleur depuis la chambre de compression 52 vers l'atmosphère. Pour améliorer l'évacuation de la chaleur, la culasse 14 présente avantageusement des ailettes de refroidissement 62.

Ainsi, par rapport aux dispositifs de l'art antérieur décrit dans FR-A-2 752 269 et FR-A-2 752 310 où le carter vilebrequin, le carter cylindre et la culasse sont réalisés en alliage d'aluminium - le carter vilebrequin et le carter cylindre étant réalisés de manière monobloc - le compresseur 10 présente un carter vilebrequin en matériau polymère chargé de fibres de verre tandis que la pièce 14 qui forme la culasse et le cylindre est en alliage d'aluminium afin d'assurer une bonne dissipation thermique ainsi qu'une bonne résistance thermique. L'étape d'usinage est donc réduite et moins fastidieuse dans le cas du compresseur 10 que dans ces dispositifs de l'art antérieur.

Par ailleurs, un conduit de refoulement 64 est ménagé dans la pièce culasse/cylindre 14, à proximité de sa surface 66, en vis-à-vis de la surface supérieure du piston 48 recouverte du joint à lèvre 50. Cette surface 66 forme ainsi la paroi supérieure de la chambre de compression 52. Le conduit de refoulement 64 débouche à l'extérieur de la pièce culasse/cylindre 14, au travers d'un clapet anti-retour 68, qui en l'espèce est métallique.

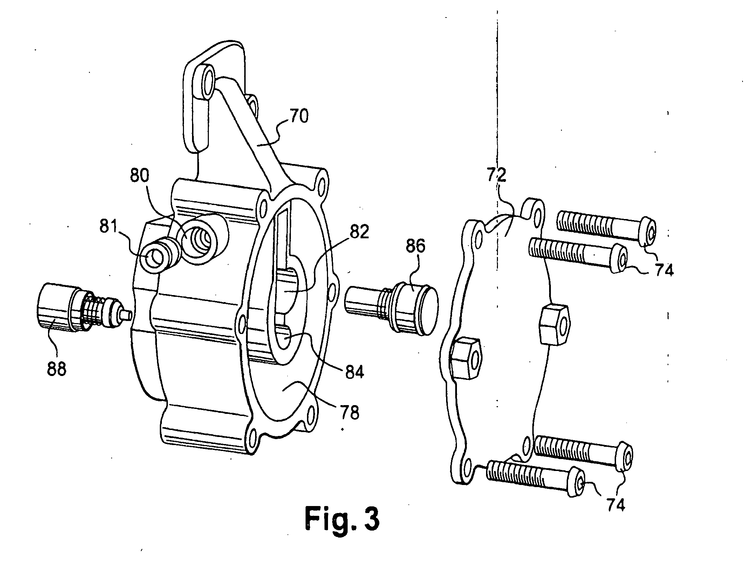

Par ailleurs, tel que représenté aux figures 1 et 3, le dispositif dessiccateur 16 comporte un corps 70 et une plaque 72, fixés solidairement au carter vilebrequin 18 et à la culasse 14. En l'espèce, cette fixation est réalisée au moyen de vis 74.

Avantageusement, du fait de la forme du corps 70, les vis mises en oeuvre pour la fixation du corps sur le carter vilebrequin 18 et la culasse 14 sont de dimension réduite par rapport à celles des dispositifs de l'état de la technique à cartouche dessiccative qui ont recours à des vis lesquelles sont comparativement longues. Ainsi, le dispositif dessiccateur 16 se fixe facilement sur le carter vilebrequin 18 et sur la pièce culasse/cylindre 14.

Par ailleurs, le dispositif dessiccateur 16 est peu encombrant.

En outre, le corps 70 et la plaque 72 ferment le carter vilebrequin 18 et sont fixées à ce carter vilebrequin de sorte qu'aucun support de cartouche dessiccative ni aucune plaque supplémentaire de fermeture du carter vilebrequin n'est nécessaire. Le montage du dispositif dessiccateur est ainsi simplifié et nécessite moins de pièces.

Le corps 70 comporte un conduit d'air 76 adapté à être disposé en vis-à-vis du conduit de refoulement 64 ménagé dans la culasse 14, le clapet anti-retour 68 étant interposé entre le conduit de refoulement 64 de la culasse 14 et le conduit d'air 76 du corps 70.

Le conduit d'air 76 du corps 70 débouche par ailleurs dans une cavité 78 via des premier et deuxième conduits 82, 84. La cavité 78 contient un matériau dessiccateur (non représenté pour une meilleure lisibilité des figures), en l'espèce des granulés dessiccateurs en gel de silice, pour assécher l'air qui traverse la cavité 78.

La cavité 78 a, en l'espèce, la forme d'une portion d'anneau (ou de tore), dont l'axe A3 est sensiblement parallèle à l'axe A1 de rotation de l'arbre de sortie 26 du moteur 20. La cavité 78 est fermée, au niveau de son côté opposé au carter vilebrequin 18, par la plaque 72.

Cette disposition de la cavité 78 contenant un matériau dessiccateur permet, pour un même volume de matériau dessiccateur - et donc une même efficacité d'assèchement de l'air - un gain de place par rapport aux dispositifs connus présentant une cartouche dessicative cylindrique fixée parallèlement ou perpendiculairement à l'axe de rotation de l'arbre de sortie du moteur.

La cavité 78 débouche vers l'extérieur au travers d'un conduit d'évacuation 80, muni d'un raccord rapide 81.

La cavité 78 débouche par ailleurs à l'intérieur du carter vilebrequin 18 via une première et une deuxième chambres 82, 84 munies respectivement d'une première valve 86 et d'une deuxième valve 88.

Les première et deuxième valves 86 et 88 sont logées dans la partie centrale du corps du dessiccateur, ce qui procure avantageusement un gain de place.

La première valve 86 joue le rôle d'un distributeur pneumatique. Ainsi, quand le compresseur est en fonctionnement, la pression de l'air dans la première chambre 82 ferme la première valve 86, ce qui a pour effet de libérer un orifice (caché derrière la tête de valve sur la figure 1) lequel met en communication la chambre 82 avec la cavité 78 de sorte que l'air provenant du conduit 76 parvienne jusqu'à la cavité 78 où il est asséché, puis dans le conduit d'évacuation 80.

La seconde valve 88 est une valve de pression maximum pour protéger le dispositif relié au compresseur 10 contre les surpressions. Ainsi, lorsque la pression dans la deuxième chambre 84 est supérieure à une valeur prédéterminée, la seconde valve 88 s'ouvre. L'ouverture de la seconde valve 88 permet alors l'évacuation de l'air comprimé dans la chambre de vilebrequin 43 et, de là, vers le conduit d'admission (non représenté) qui présente une ouverture vers l'atmosphère environnante. Dans ce cas, le conduit d'admission joue le rôle de conduit d'échappement pour l'air comprimé évacué depuis la deuxième chambre 84 et le filtre placé dans ce conduit d'admission joue le rôle de silencieux. De plus, quand le compresseur est arrêté, la pression dans la première chambre 82 diminue progressivement du fait du passage de l'air de la chambre 82 vers la chambre de vilebrequin 43 à travers un orifice 86a de faible diamètre ménagé dans la première valve 86 de sorte que la première valve 86 s'ouvre sous l'effet d'un ressort. L'ouverture de cette première valve 86 permet l'échappement de l'air depuis la cavité du dessiccateur 78 vers l'atmosphère environnante au travers de la chambre de vilebrequin 43 et du conduit d'admission jouant le rôle de conduit d'échappement. Cet échappement est rendu possible du fait que la tête de la première valve 86, du fait de son déplacement, libère l'orifice (non visible sur les figures) mentionné plus haut et autorise cette fois-ci la communication de fluide entre la cavité du dessiccateur 78 et la chambre de vilebrequin 43. Par la suite, le fonctionnement du compresseur 10 est décrit dans le cas particulier et non limitatif où il est mis en oeuvre dans un dispositif de suspension pneumatique d'un véhicule automobile.

Dans ce cas, le compresseur 10 est utilisé pour alimenter en air comprimé des coussins de suspension qui sont en communication de fluide avec le conduit d'évacuation 80 du compresseur 10. Au moins une électrovalve de coussin est interposée entre le conduit d'évacuation 80 et les coussins de suspension. Cette électrovalve est adaptée à être commandée par une unité électronique de pilotage de manière à sélectivement commander la communication de fluide entre le conduit d'évacuation 80 et les coussins.

De préférence, l'électrovalve de coussin est fermée (isolant ainsi les coussins de suspension du conduit d'évacuation 80) lorsqu'elle n'est pas excitée par l'unité électronique de pilotage de manière à éviter les risques de fuite des coussins en cas de disfonctionnement.

La position de la partie mobile des coussins de suspension par rapport à la caisse du véhicule est par ailleurs mesurée, par exemple, par un capteur de surveillance électronique. Les câbles d'alimentation 37 du moteur électrique 20 sont reliés à la batterie du véhicule. Une unité électronique de pilotage (de préférence la même que celle commandant l'électrovalve de coussin) est adaptée à commander l'alimentation électrique du moteur 20 par la batterie en fonction du signal fourni par le capteur de surveillance électronique.

De préférence, dans cette utilisation, Quand le compresseur est mis en service alors que les suspensions sont dans une position basse - c'est-à-dire que les coussins comportent une quantité d'air comprimé insuffisante pour obtenir l'assiette prédéterminée du véhicule - l'unité électronique commande que le moteur 20 soit alimenté électriquement par la batterie du véhicule. Dans ce cas, le moteur électrique 20 entraîne l'arbre de sortie 26. Le piston 48 en position de descente s'incline et ouvre un passage (en lunule) entre le joint à lèvre 68 et la paroi délimitant la chambre de compression 58 dans la pièce culasse/cylindre 14. A travers ce passage, la chambre de compression 58 est alimentée en air atmosphérique au fur et à mesure de la descente du piston 48. Cet air atmosphérique est aspiré à une pression légèrement inférieure à la pression atmosphérique à travers le filtre (non représenté), situé à l'entrée du conduit d'admission, à l'extérieur du carter vilebrequin 18. De préférence, le conduit d'admission débouche en un endroit adapté pour que l'air aspiré soit propre et où les risques de projection d'eau sont réduits voire nuls.

Lorsque le piston 48 remonte, il comprime l'air contenu dans la chambre de compression 52. L'air comprimé est alors successivement dirigé dans le conduit d'air 76 puis dans la cavité 78 où il est asséché. Il est ensuite évacué vers les coussins via le conduit d'évacuation 80.

En effet, dans ce cas, la pression de l'air dans la première chambre 82 ferme la première valve 86, ce qui a pour effet de libérer un orifice (caché derrière la tête de valve sur la figure 1) lequel met en communication la chambre 82 avec la cavité 78 de sorte que l'air provenant du conduit 76 parvienne jusqu'à la cavité 78 où il est asséché, puis dans le conduit d'évacuation 80. L'air sec est ensuite évacué vers les coussins du système de suspension.

Lorsque le piston 48 atteint sa position de point mort haut, le clapet anti-retour 68 se referme.

Au cours de la descente d'aspiration du piston 48, l'inclinaison de la bielle 44 et du piston 48 s'accroît à nouveau jusqu'à atteindre une inclinaison maximale où, sous l'effet de la dépression régnant dans la chambre de compression 52, le joint à lèvre 50 se rabat vers l'intérieur pour laisser un passage d'air en forme de lunule entre le piston 48 et la paroi de la culasse 14 délimitant latéralement la chambre de compression 52.

La section d'aspiration en lunule permet ainsi un nouveau remplissage de la chambre de compression 52 en air atmosphérique aspiré depuis la chambre de vilebrequin 43, sensiblement jusqu'au point mort bas.

L'unité électronique de pilotage commande l'alimentation électrique du moteur 20 et l'ouverture de l'électrovalve de coussin jusqu'à ce que les coussins aient atteint un niveau suffisant permettant d'obtenir l'assiette désirée.

Une fois l'assiette désirée obtenue, l'électrovalve de coussin se ferme de manière à isoler les coussins du compresseur et le compresseur est arrêté.

Dans cette configuration, c'est-à-dire les coussins isolés du compresseur et le compresseur arrêté, la pression dans la première chambre 82 diminue progressivement du fait du passage de l'air de la chambre 82 vers la chambre de vilebrequin 43 à travers un orifice 86a de faible diamètre ménagé dans la première valve 86 de sorte que la première valve 86 s'ouvre sous l'effet d'un ressort. L'ouverture de cette première valve 86 permet l'échappement de l'air depuis la cavité du dessiccateur 78 vers l'atmosphère environnante au travers de la chambre de vilebrequin 43 et du conduit d'admission jouant le rôle de conduit d'échappement.

Cependant, les coussins de suspension étant isolés du conduit d'évacuation 80, leurs volumes restent sensiblement constants permettant ainsi d'éviter l'affaissement du véhicule automobile, notamment à l'arrêt.

Par ailleurs, si les coussins de suspension viennent en position trop haute, l'air comprimé en excès contenu dans les coussins de suspension s'échappe à travers l'électrovalve de coussin ouverte (l'ouverture de l'électrovalve ayant été commandée par l'unité électronique de pilotage) puis via la cavité 78 contenant le matériau dessiccateur, qu'il traverse en le régénérant, c'est-à-dire en se chargeant de l'humidité qu'elle contenait, la valve 86, qui s'ouvre à l'encontre du ressort, et enfin la chambre de vilebrequin 43 qui se décharge dans l'atmosphère à travers le filtre (non représenté) dont les dépôts extérieurs sont alors expulsés pour provoquer un décolmatage au moins partiel du filtre.

L'échappement de l'air comprimé se produit en général avec une diminution significative de la température de cet air, ce qui peut contribuer à refroidir la culasse 14 du compresseur 10 et aussi le carter vilebrequin 18 notamment dans la chambre de vilebrequin 43. De même, les propriétés de bonne conductibilité thermique de l'alliage d'aluminium de la culasse 14 peuvent contribuer au transfert d'une partie de la chaleur développée dans la culasse 14 vers le dispositif dessiccateur 16 qui, lorsqu'il est relativement saturée d'humidité, peut geler et ainsi s'obturer partiellement, notamment après une longue période de consommation d'air.

Lorsque l'assiette est de nouveau atteinte, l'électrovalve de coussin est fermée pour isoler les coussins du conduit d'évacuation 80 du compresseur 10 et le compresseur est arrêté.

Bien entendu, la présente invention n'est pas limitée aux exemples et au mode de réalisation décrits et représentés, mais elle est susceptible de nombreuses variantes accessibles à l'homme de l'art, comme décrites dans les revendications attachées.

## Revendications

1. Compresseur à piston (10) comprenant :
un piston (48) adapté à être entraîné en translation alternative par la rotation d'un vilebrequin (44) ménagé dans un carter vilebrequin (18), et
- un moteur électrique (20) dont l'arbre de sortie (26) est adapté à entraîner en rotation le vilebrequin (44), le moteur électrique (20) comprenant des porte-balai (38) qui sont fixés sur le carter vilebrequin (18),
**caractérisé en ce que** le carter vilebrequin (18) est réalisé par surmoulage sur les
porte-balai (38) pour que les porte-balai (38) soient fixés sur le carter vilebrequin (18).

2. Compresseur à piston selon la revendication 1, dans lequel le carter vilebrequin (18) est en matériau polymère chargé de fibres de verre.

3. Compresseur à piston selon la revendication 1 ou 2, dans lequel les porte-balai (38) sont en laiton.

4. Compresseur à piston selon l'une quelconque des revendications 1 à 3, dans lequel le carter vilebrequin (18) comporte un logement (42) recevant un palier (40) supportant en rotation l'arbre de sortie (26) du moteur électrique (20).

5. Compresseur à piston selon la revendication 4, dans lequel le logement (42) est ouvert sur l'intérieur du carter vilebrequin (18) pour permettre le montage du palier depuis l'intérieur du carter vilebrequin.

6. Compresseur à piston selon l'une quelconque des revendications 1 à 5, dans lequel le moteur comprend des balais (30), les balais (30) étant fixés à une partie des porte-balai (38) située à l'extérieur du carter vilebrequin (18).

7. Compresseur à piston selon l'une quelconque des revendications 1 à 6, comprenant en outre un dispositif dessiccateur (16).

8. Compresseur à piston selon la revendication 7, dans lequel le dispositif dessiccateur (16) comporte une cavité (78) contenant un matériau dessiccateur.

9. Compresseur à piston selon la revendication 8, dans lequel la cavité a la forme d'une portion d'anneau, l'axe de la cavité (A3) s'étendant parallèlement à l'axe de rotation (A1) de l'arbre de sortie (26) du moteur (20).

10. Compresseur à piston selon l'une des revendications 7 à 9, dans lequel le dispositif dessiccateur (16) comporte un corps (70), fixé au carter vilebrequin (18), dans lequel est formée la cavité (78) contenant le matériau dessiccateur.

11. Compresseur à piston selon la revendication 10, dans lequel la cavité est fermée au moyen d'une plaque (72) fixée au carter vilebrequin (18).

12. Compresseur à piston selon l'une quelconque des revendications 1 à 11, dans lequel le compresseur (10) comporte une chambre de compression (52) ménagée dans une pièce (14) formant cylindre et culasse.

13. Compresseur à piston selon la revendication 12, dans lequel la culasse présente des ailettes de refroidissement (62).

14. Compresseur à piston selon la revendication 12 ou 13, dans lequel la pièce (14) formant cylindre et culasse est réalisée en alliage d'aluminium.

15. Compresseur à piston selon l'une quelconque des revendications 1 à 14, dans lequel le piston (48) est rigidement solidaire d'une bielle (56), la bielle (56) étant montée à rotation sur un maneton (46) d'un vilebrequin (44) et dans lequel l'admission d'air dans la chambre de compression (52) est commandée par la géométrie de l'ensemble piston-bielle-vilebrequin.

16. Dispositif de suspension pneumatique, comprenant :
- au moins un coussin ;
- un compresseur à piston (10) selon l'une quelconque des revendications 1 à 15, le coussin étant en communication de fluide, au travers d'au moins une électrovalve, avec le compresseur ; et
- une unité électronique de pilotage adaptée à commander ladite électrovalve.

## Patentansprüche

1. Kolbenverdichter (10), der Folgendes aufweist:
- einen Kolben (48), der angepasst ist, um in abwechselnder Verschiebung durch die Drehung einer Kurbelwelle (44), die in einem Kurbelgehäuse (18) eingerichtet ist, angetrieben zu werden, und
- einen Elektromotor (20), dessen Ausgangswelle (26) angepasst ist, um die Kurbelwelle (44) in Drehung anzutreiben, wobei der Elektromotor (20) Bürstenhalter (38) aufweist, die auf dem Kurbelgehäuse (18) befestigt sind,
**dadurch gekennzeichnet, dass** das Kurbelgehäuse (18) durch Abformen auf den Bürstenhaltern (38) hergestellt ist, damit die Bürstenhalter (38) auf dem Kurbelgehäuse (18) befestigt sind.

2. Kolbenverdichter nach Anspruch 1, bei dem das Kurbelgehäuse (18) aus Polymerwerkstoff mit Glasfaserfüllung besteht.

3. Kolbenverdichter nach Anspruch 1 oder 2, bei dem die Bürstenhalter (38) aus Messing bestehen.

4. Kolbenverdichter nach einem der Ansprüche 1 bis 3, bei dem das Kurbelgehäuse (18) eine Aufnahme (42) aufweist, die ein Lager (40) erhält, das die Ausgangswelle (26) des Elektromotors (20) in Drehung trägt.

5. Kolbenverdichter nach Anspruch 4, bei dem die Aufnahme (42) auf dem Inneren des Kurbelgehäuses (18) offen ist, um die Montage des Lagers von der Innenseite des Kurbelgehäuses her zu erlauben.

6. Kolbenverdichter nach einem der Ansprüche 1 bis 5, bei dem der Motor Bürsten (30) aufweist, wobei die Bürsten (30) an einem Teil der Bürstenhalter (38), der sich außerhalb des Kurbelgehäuses (18) befindet, befestigt sind.

7. Kolbenverdichter nach einem der Ansprüche 1 bis 6, der ferner eine Trockenvorrichtung (16) aufweist.

8. Kolbenverdichter nach Anspruch 7, bei dem die Trockenvorrichtung (16) einen Hohlraum (78), der ein Trockenmittel enthält, aufweist.

9. Kolbenverdichter nach Anspruch 8, bei dem der Hohlraum die Form eines Ringabschnitts aufweist, wobei sich die Achse des Hohlraums (A3) parallel zu der Rotationsachse (A1) der Ausgangswelle (26) des Motors (20) erstreckt.

10. Kolbenverdichter nach einem der Ansprüche 7 bis 9, bei dem die Trockenvorrichtung (16) einen Körper (70) aufweist, der an dem Kurbelgehäuse (18) befestigt ist, in dem der Hohlraum (78), der das Trockenmittel enthält, ausgebildet ist.

11. Kolbenverdichter nach Anspruch 10, bei dem der Hohlraum mit einer Platte (72), die an dem Kurbelgehäuse (18) befestigt ist, verschlossen ist.

12. Kolbenverdichter nach einem der Ansprüche 1 bis 11, bei dem der Verdichter (10) eine Verdichtungskammer (52), die in einem Teil (14), das Zylinder und Zylinderkopf bildet, eingerichtet ist.

13. Kolbenverdichter nach Anspruch 12, bei dem der Zylinderkopf Kühlrippen (62) aufweist.

14. Kolbenverdichter nach Anspruch 12 oder 13, bei dem das Teil (14), das Zylinder und Zylinderkopf bildet, aus Aluminiumlegierung hergestellt ist.

15. Kolbenverdichter nach einem der Ansprüche 1 bis 14, bei dem der Kolben (48) starr mit einem Pleuel (56) fest verbunden ist, wobei das Pleuel (56) drehend auf einem Zapfen (46) einer Kurbelwelle (44) montiert ist, und bei dem der Lufteinlass in die Verdichtungskammer (52) von der Geometrie der Einheit Kolben-Pleuel-Kurbelwelle gesteuert wird.

16. Pneumatische Aufhängungsvorrichtung, die Folgendes aufweist:
- mindestens ein Kissen,
- einen Kolbenverdichter (10) nach einem der Ansprüche 1 bis 15, wobei das Kissen durch mindestens ein Magnetventil mit dem Verdichter in Fluidverbindung ist, und
- eine elektronische Steuereinheit, die angepasst ist, um das Magnetventil zu steuern.

## Claims

1. A reciprocating compressor (10) comprising:
- a piston (48) adapted to be driven in reciprocating translation by the rotation of a crankshaft (44) provided in a crankcase (18), and
- an electric motor (20) the output shaft (26) of which is adapted to drive the crankshaft (44) in rotation, the electric motor (20) including brush holders (38) which are fixed to the crankcase (18)
**characterized in that** the crankcase (18) is produced by insert molding on the brush holder (38) so that the brush holders (38) are fixed to the crankcase (18).

2. The reciprocating compressor according to claim 1, wherein the crankcase (18) is of glass fiber-reinforced polymer material.

3. The reciprocating compressor according to claim 1 or 2, wherein the brush holders (38) are of brass.

4. The reciprocating compressor according to any one of claims 1 to 3, wherein the crankcase (18) includes a housing (42) receiving a bearing (40) rotatably supporting the output shaft (26) of the electric motor (20).

5. The reciprocating compressor according to claim 4, wherein the housing (42) is open to the inside of the crankcase (18) for mounting the bearing from inside the crankcase.

6. The reciprocating compressor according to any one of claims 1 to 5, wherein the motor comprises brushes (30), the brushes (30) being secured to a portion ofthe brush holder (38) located outside ofthe crankcase (18).

7. The reciprocating compressor according to any one of claims 1 to 6, further comprising a dryer means (16).

8. The reciprocating compressor according to claim 7, wherein the dryer means (16) comprise a cavity (78) containing a desiccant material.

9. The reciprocating compressor according to claim 8, wherein the cavity has the shape of a ring portion, the axis of the cavity (A3) extending parallel to the axis of rotation (A1) of the output shaft (26) of the motor (20).

10. The reciprocating compressor according to one of claims 7 to 9, wherein the dryer means (16) comprises a body (70), fixed to the crankcase (18), wherein is formed the cavity (78) containing the desiccant material.

11. The reciprocating compressor according to claim 10, wherein the cavity is closed by a plate (72) fixed to the crankcase (18).

12. The reciprocating compressor according to any one of claims 1 to 11, wherein the compressor (10) comprises a compression chamber (52) formed in a piece (14) forming cylinder and cylinder head.

13. The reciprocating compressor according to claim 12, wherein the cylinder head has cooling fins (62).

14. The reciprocating compressor according to claim 12 or 13, wherein the piece (14) forming cylinder and cylinder head is made of aluminum alloy.

15. The reciprocating compressor according to any one of claims 1 to 14, wherein the piston (48) is rigidly secured to a connecting rod (56), the connecting rod (56) being mounted rotatably on a crankpin (46) of a crankshaft (44) and wherein the air inlet into the compression chamber (52) is controlled by the geometry of the piston-connecting rod-crankshaft assembly.

16. An air spring arrangement comprising:
- at least one cushioning bag;
- a reciprocating compressor (10) according to any one of claims 1 to 15, the bag being in fluid communication, through at least one solenoid valve, with the compressor; and
- an electronic control unit adapted to control said solenoid valve.
